# EUROPEAN PATENT APPLICATION

(11) **EP 4 495 603 A1**
(43) Date of publication of application: **22.01.2025**
(21) Application number: 23770358.2
(22) Date of filing: 27.02.2023
(51) Int. Cl.: G01N 35/10, G01N 35/02

(54) **INSPECTION DEVICE**

(30) Priority: 17.03.2022 JP 2022043030
(71) Applicant: FUJIFILM Corporation, Tokyo 106-8620 (JP)
(72) Inventor: MIURA, Yoshinobu, Ashigarakami-gun, Kanagawa 258-8538 (JP); HIBE, Daisuke, Ashigarakami-gun, Kanagawa 258-8538 (JP)
(74) Representative: Dehns Germany Partnerschaft mbB
(86) International application number: PCT/JP2023/007051
(87) International publication number: WO 2023/176399

(57) **Abstract**

An examination apparatus (10) includes: a detecting unit (15) that detects a target substance in a specimen; a specimen dispensing unit (14) that has a sampling nozzle (42) and a moving mechanism (46) which moves the sampling nozzle (42); a nozzle imaging camera (62) that captures an image of the sampling nozzle (42); and a processor (16) that is configured to control the specimen dispensing unit (14) and the nozzle imaging camera (62). The processor (16) is configured to acquire an image of the sampling nozzle (42) in a state of holding the specimen after the specimen is suctioned through the sampling nozzle (42) and before the specimen is discharged to the reaction cell (R0) through the sampling nozzle (42), from the nozzle imaging camera (62), determine whether or not a formed element is present in the specimen held in the sampling nozzle (42), on the basis of the image, and discard an upper layer of the specimen accommodated in the specimen collection container (20), the upper layer including the formed element, by controlling the specimen dispensing unit (14) in a case of determining that the formed element is present.

## Description

### BACKGROUND OF THE INVENTION

### 1. Field of the Invention

The present disclosure relates to an examination apparatus.

### 2. Description of the Related Art

An examination apparatus that quantitatively or qualitatively detects a target substance in a specimen has been known. Many of such examination apparatuses use an immunoassay principle, and examples thereof include a chemiluminescent enzyme immunological analysis apparatus and a fluorescence immunological analysis apparatus (for example, JP2016-085093A).

Such an examination apparatus performs a detecting process of detecting a target substance in a specimen by detecting luminescence or fluorescence based on a label such as an enzyme label or a fluorescent label imparted to the target substance in the specimen by using an immunoreaction. Further, before such a detecting process of the target substance, a pre-process such as labeling the target substance in the specimen is performed on the specimen. In some cases, the examination apparatus is configured to automatically execute the pre-process and the detecting process and output the detection result in a case where the pre-process and the detecting process are automated and a specimen collection container accommodating the collected specimen is loaded.

In order to impart a label to the target substance in the specimen, for example, such an automated examination apparatus performs the following process using magnetic particles. First, in a reaction cell, the magnetic particles modified with the first binding substance (for example, a primary antibody) to specifically bind to the target substance (for example, an antigen) and the specimen are mixed with each other. Therefore, the target substance and the first binding substance are bound to each other through the antigen-antibody reaction to generate an immune complex. Thereby, the target substance is captured by the magnetic particles via the first binding substance. Thereafter, the immune complex is separated from the immune complex and a component derived from the specimen (unreacted substance) that does not form the immune complex, that is, so-called bound free (B/F) separation is performed.

In a case of the B/F separation, the mixed liquid is suctioned in a state where the magnetic particles are temporarily adsorbed to an inner wall surface of the reaction cell by a magnet disposed outside the reaction cell. Thereafter, the cleaning liquid is discharged to the reaction cell, and the mixed liquid is suctioned and discharged in a state where the cleaning liquid and the magnetic particles are mixed. Therefore, the magnetic particles are cleaned. Next, a labeling reagent including a second binding substance (for example, a secondary antibody) to specifically bind to the target substance and the second binding substance bound to the label are mixed with the magnetic particles. Thereby, the target substance and the second binding substance captured on the magnetic particles via the first binding substance are bound to each other, whereby the sandwich type immune complex, in which the target substance is interposed between the first binding substance and the second binding substance, is generated. Thereafter, the magnetic particles are cleaned again by mixing the cleaning liquid and the magnetic particles for the B/F separation. In a case where the label is an enzyme label, the magnetic particles and the reagent including a luminescent substrate are further mixed and used for the examination process.

In such a manner, the automated examination apparatus is provided with a specimen dispensing unit that suctions the specimen from the specimen collection container and dispenses the specimen to the reaction cell. In order to perform an accurate examination, it is desirable that the specimen dispensed to the reaction cell does not include a formed substance. In a case where the collected specimen is whole blood, the whole blood is subjected to component separation into the blood cells and the blood plasma or the blood clot and the serum through a process such as centrifugal separation, and liquid components such as a serum or blood plasma are generally used for the examination. A separated serum or blood plasma may include a formed element such as fibrin due to differences in transport conditions of the specimen, pre-process conditions, and the like. Such a formed substance often floats in an upper layer portion of the specimen, and a formed element may be suctioned in a case where serum or blood plasma is suctioned through the sampling nozzle. The formed element causes clogging of the sampling nozzle and causes abnormal stoppage due to a pressure detection error in a case where the suction amount in the specimen dispensing unit is detected. Further, in a case where the process of generating the above-mentioned immune complex with the formed element included therein is performed, the antigen-antibody reaction is inhibited, which causes abnormality in the examination result.

JP2015-200527A proposes an examination apparatus comprising a detecting unit that captures an image of a sample dispensing probe (corresponding to a sampling nozzle) in a state of suctioning and holding a specimen from a sample container (corresponding to a specimen collection container) and detects whether or not a solid larger than an opening surface of an outlet of the sample dispensing probe is attached to a distal end of the sample dispensing probe.

### SUMMARY OF THE INVENTION

JP2015-200527A discloses a configuration in which the sample held by the sample dispensing probe is discarded, the specimen is suctioned again from the sample container, and the examination is continued in a case where a solid (corresponding to a formed substance) is attached to a distal end of a sample dispensing probe. However, even in a case where the specimen is suctioned again from the sample container, the solid is suctioned again into the sample dispensing probe distal end. Thus, there is a risk that the abnormal stoppage due to the pressure detection error or the abnormality in the examination result may occur.

The present disclosure has been made in consideration of the above-mentioned situations. An object thereof is to provide an examination apparatus capable of suppressing occurrence of an error at the time of re-suctioning of a specimen even in a case where a formed substance is included in the specimen held in a chip of the sampling nozzle.

An examination apparatus according to an aspect of the present disclosure comprises:
a detecting unit that detects a target substance in a specimen;
a specimen dispensing unit that has a sampling nozzle, through which the specimen is suctioned from a specimen collection container and the specimen is discharged to a reaction cell, and a moving mechanism which moves the sampling nozzle;
a nozzle imaging camera that captures an image of the sampling nozzle; and
a processor that is configured to control the specimen dispensing unit and the nozzle imaging camera,
in which the processor is configured to
acquire an image of the sampling nozzle in a state of holding the specimen after the specimen is suctioned through the sampling nozzle and before the specimen is discharged to the reaction cell through the sampling nozzle, from the nozzle imaging camera,
determine whether or not a formed element is present in the specimen held in the sampling nozzle, on the basis of the image, and
discard an upper layer of the specimen accommodated in the specimen collection container, the upper layer including the formed element, by controlling the specimen dispensing unit in a case of determining that the formed element is present.

In the examination apparatus according to the aspect of the present disclosure, the processor may be configured to control the specimen dispensing unit such that the specimen dispensing unit performs a process of suctioning the specimen again from the specimen collection container and discharging the specimen to the reaction cell, after discarding the upper layer including the formed element of the specimen accommodated in the specimen collection container.

The examination apparatus according to the aspect of the present disclosure may further comprise a notification unit that issues a notification of an error, in which the processor is configured to cause the notification unit to issue a notification of presence of the formed element in a case of determining that the formed element is present in the specimen held in the sampling nozzle.

In the examination apparatus according to the aspect of the present disclosure, the specimen may be a blood plasma or a serum in whole blood subjected to a centrifugal separation process in the specimen collection container.

In the examination apparatus according to the aspect of the present disclosure, it is preferable that the detecting unit detects the target substance by detecting luminescence or fluorescence from a label attached to the target substance by using an antigen-antibody reaction.

According to the technology of the present disclosure, even in a case where the specimen includes a formed substance in the specimen held in the chip of the sampling nozzle, the examination apparatus is able to suppress error occurrence at the time of re-suction of the specimen.

### BRIEF DESCRIPTION OF THE DRAWINGS

Fig. 1 is a schematic view showing a configuration of an examination apparatus 10 according to an embodiment.
Fig. 2A is a top view of a cartridge, and Fig. 2B is a front view thereof.
Fig. 3 is a diagram showing a step of imparting a label to a target substance in a reaction cell.
Fig. 4 is a diagram for describing a cleaning step.
Fig. 5 is a diagram showing a positional relationship between a nozzle imaging camera and a sampling nozzle.
Fig. 6 is a diagram showing steps from suctioning a specimen through the sampling nozzle to dispensing the specimen.

### DESCRIPTION OF THE PREFERRED EMBODIMENTS

Hereinafter, an examination apparatus according to an embodiment of the present disclosure will be described with reference to the drawings. In each of the drawings, constituent elements represented by the same reference numerals mean the same constituent elements. However, unless otherwise specified in the specification, each constituent element is not limited to one, and each constituent element may be plural.

### "Examination Apparatus of Embodiment"

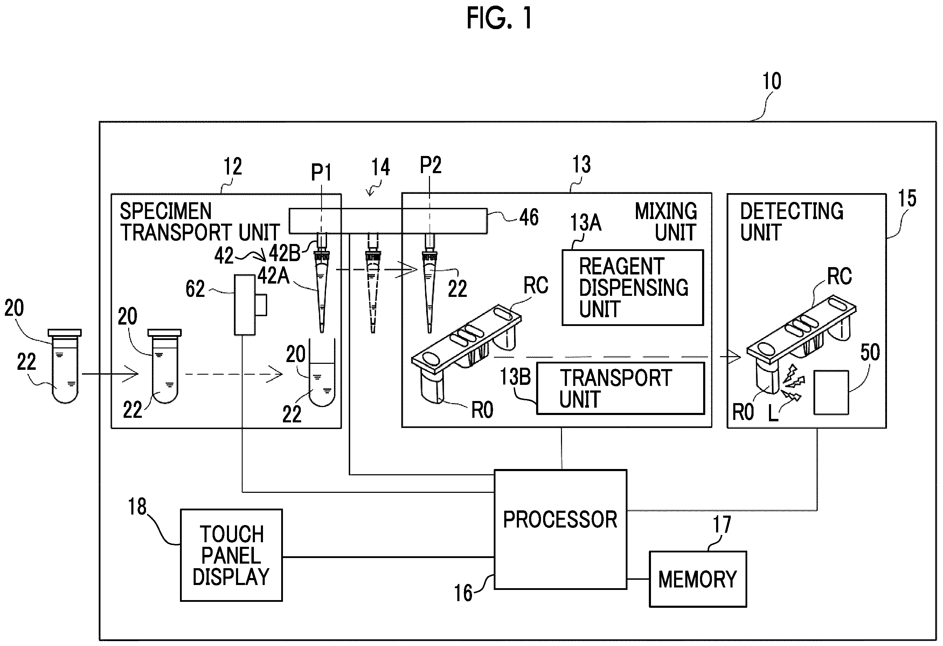

Fig. 1 is a schematic view showing a configuration of an immunological analysis apparatus which is an examination apparatus 10 according to one embodiment of the present disclosure. The examination apparatus 10 is an automatic immunological analysis apparatus that performs a pre-process of imparting a label to a target substance that is a substance to be detected in the specimen, performs a detecting process of detecting light from the label, and outputs a detection result, after a specimen collection container that accommodates a specimen collected from a biological body is loaded.

The examination apparatus 10 includes a specimen transport unit 12, a mixing unit 13, a specimen dispensing unit 14, a detecting unit 15, a processor 16, a memory 17, and a touch panel display 18.

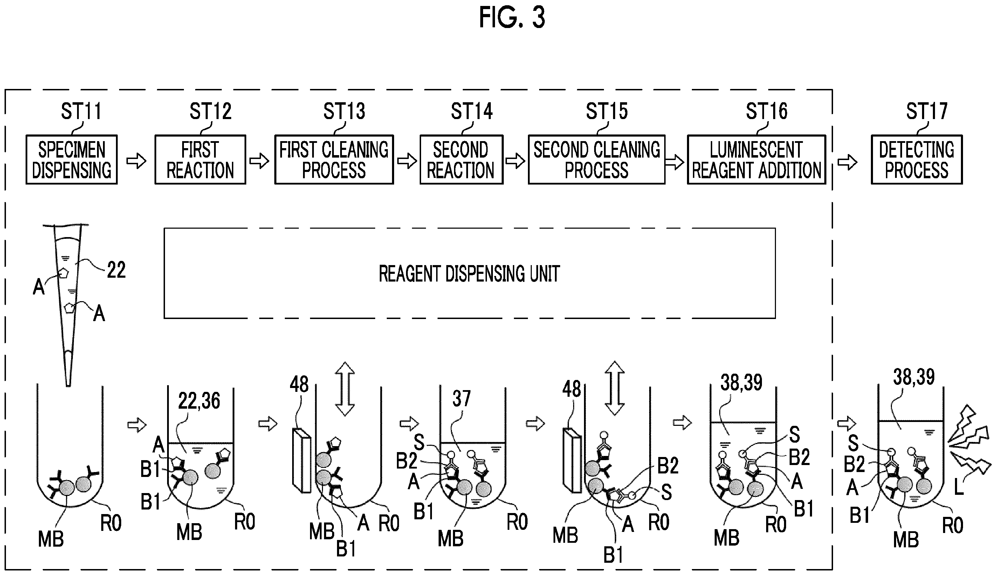

The detecting unit 15 executes a detecting process of detecting a target substance A (refer to Fig. 3 and the like) in a specimen 22. The detecting unit 15 includes a photodetector 50 such as a photomultiplier tube or a photodiode. The photodetector 50 is disposed to face a reaction cell R0 and detects light L caused by a label S bound to the target substance A. In the present example, an enzyme is used as the label S to detect chemiluminescence that is generated by reacting with the luminescent substrate.

A processor 16 integrally controls each unit of the examination apparatus 10. An example of the processor 16 is a central processing unit (CPU) that performs various types of control by executing a program. The CPU functions as a control unit that controls each unit by executing a program.

Further, the processor 16 acquires information about a light amount of the light L detected by the photodetector 50 and calculates a concentration of the target substance A on the basis of the information about the light amount.

A memory 17 is an example of a memory connected to or built into the CPU as the processor 16. For example, the memory 17 stores a control program. In addition to the control program, the memory 17 stores setting information that is preset in order for the processor 16 to perform the various types of control.

Further, the memory 17 stores information indicating a correspondence relationship between the light amount of the light L detected by the photodetector 50 and an amount of the target substance A. The correspondence relationship is stored, for example, as a calibration curve represented by a function. The correspondence relationship may be a format of a table. The processor 16 calculates the amount of the target substance A from, for example, the light amount of the light L, which is acquired from the photodetector 50, and the calibration curve stored in the memory 17.

The touch panel display 18 receives an operation instruction, such as an instruction to start an examination (hereinafter, referred to as an examination start instruction) by a user. Further, the touch panel display 18 displays information such as an examination result.

The specimen transport unit 12 has a loading section (not shown in the drawing) into which a specimen collection container 20 for accommodating the specimen 22 is loaded, and transports the loaded specimen collection container 20 to a position accessible by a sampling nozzle 42 of the specimen dispensing unit 14 to be described later.

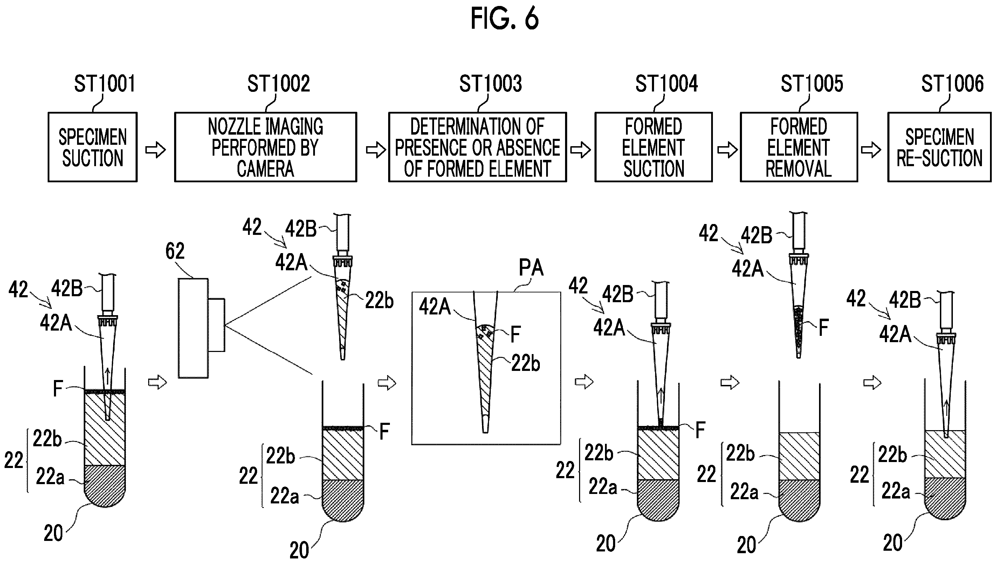

The specimen 22 is, for example, a biological fluid such as blood collected from a biological body. Hereinafter, a case where the specimen 22 is blood will be described, but the specimen 22 is not limited to blood. In the present embodiment, the specimen collection container 20 is a blood collection tube. For example, in a case where the blood is whole blood, the whole blood (specimen 22) is subjected to component separation into blood cells 22a and blood plasma 22b (refer to Fig. 6) or into blood clot and serum through the centrifugal separation process or the like, and the blood plasma or the serum is used for the examination of the target substance. The target substance, which can be included in the specimen 22 and which is a target of the examination, is, for example, an antigen, an antibody, a protein, or a low-molecular-weight compound.

The mixing unit 13 executes a mixing process of mixing the magnetic particles MB and the liquid in the reaction cell R0, the mixing process being performed on the specimen 22 to be used for the detecting process before the detecting process is performed. The mixing process will be described later. The mixing unit 13 includes a loading section (not shown in the drawing) into which a cartridge RC having a plurality of cells including the reaction cell R0 is loaded, and a reagent dispensing unit 13A. The cartridge RC is provided with cells R1 to R4 for accommodating various reagents in addition to the reaction cell R0, and openings 30 to 34 of the cells R1 to R4 are sealed with a sealing film (not shown in the drawing).

The reagent dispensing unit 13A includes a perforating nozzle (not shown in the drawing) having a perforating function of piercing the sealing film provided in the cartridge RC to open a hole. The mixing process is performed on the magnetic particles MB in the reaction cell R0 by repeating the suction and discharge of the liquid into which the magnetic particles MB are mixed by the perforating nozzle of the reagent dispensing unit 13A.

Further, the mixing unit 13 includes a transport unit 13B. The transport unit 13B transports the cartridge RC to a location at which each process step in the mixing unit 13 is executed. Further, the transport unit 13B transports the cartridge RC from the mixing unit 13 to the detecting unit 15.

The specimen dispensing unit 14 performs a specimen dispensing process of suctioning the specimen 22 from the specimen collection container 20 and discharging the specimen 22 to the cartridge RC loaded in the mixing unit 13. The specimen dispensing unit 14 includes a sampling nozzle 42 and a moving mechanism 46 that moves the sampling nozzle 42. The moving mechanism 46 moves the sampling nozzle 42 in a vertical direction (up-down direction) and a horizontal direction. The movements of the sampling nozzle 42 in the vertical direction and the horizontal direction each are performed by a linear actuator as an example.

Further, for example, the sampling nozzle 42 includes a nozzle body 42B and a chip 42A that is interchangeably attached to a distal end of the nozzle body 42B. The distal end of the nozzle body 42B is configured to be aligned with a base end of the chip 42A. The chip 42A is replaced in order to prevent contamination from being caused by a plurality of liquids. The chip 42A is a single-use type and is disposable. The chip 42A of the sampling nozzle 42 is replaced for each specimen 22. In the present embodiment, the mounting of the chip 42A on the distal end of the nozzle body 42B of the sampling nozzle 42 is the same as the mounting of the chip 42A on the distal end of the sampling nozzle 42. The specimen dispensing unit 14 includes a loading section (not shown in the drawing) on which the chip 42A is loaded, and the loaded chip 42A is mounted on the nozzle body 42B of the sampling nozzle 42.

The moving mechanism 46 moves the sampling nozzle 42 in the horizontal direction between the suction position P1 of the specimen transport unit 12 and the dispensing position P2 of the mixing unit 13. The suction position P1 is a position at which the specimen 22 is suctioned from the specimen collection container 20. The dispensing position P2 is a position at which the specimen 22 is discharged to the reaction cell R0 of the cartridge RC which is set in the mixing unit 13.

Further, the moving mechanism 46 moves the sampling nozzle 42 in the vertical direction between an entrance position at which the chip 42A enters the specimen collection container 20 or the reaction cell R0 and a retreat position at which the chip 42A retreats from the specimen collection container 20 or the reaction cell R0 at each of the suction position P1 and the dispensing position P2. The liquid is suctioned and discharged through the sampling nozzles 42 at the entrance position.

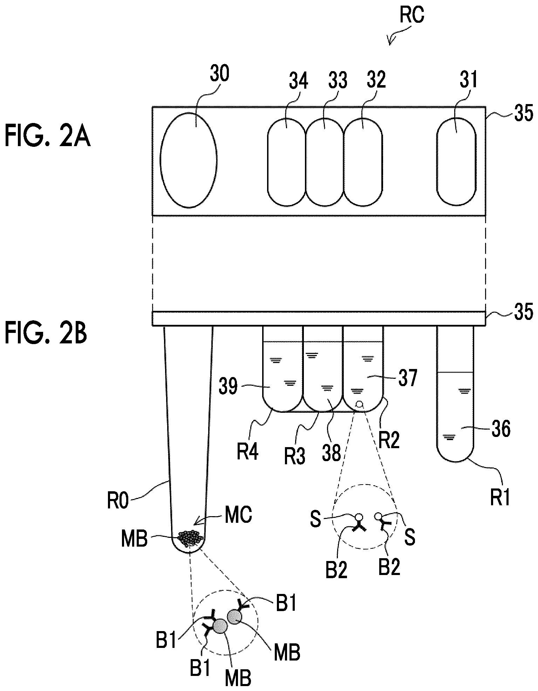

Fig 2A and Fig. 2B each are a schematic view of the cartridge RC, in which Fig. 2A is a top view of the cartridge RC and Fig. 2B is a front view of the cartridge RC. The cartridge RC includes a plate-shaped connection portion 35 having five openings 30 to 34, and five tubular cells R0 to R4 each having one end of each of the openings 30 to 34 and extending downward to include the reaction cell R0. The cartridge RC has a configuration in which a plurality of cells R0 to R4 are integrated by the connection portion 35. Among the plurality of cells R0 to R4, the reaction cell R0 and the cell R1 disposed at both ends are longer than the other cells R2 to R4. The reaction cell R0 is the longest.

Before use, the openings 30 to 34 of the cartridge RC are covered with the sealing film (not shown in the drawing). The cartridge RC is loaded in the examination apparatus 10 in advance, and one cartridge RC is used for one specimen 22.

The specimen 22 is dispensed to the reaction cell R0. The reaction cell R0 is a cell in which a process of imparting the label to the target substance in the specimen 22 is performed. The reaction cell R0 accommodates a lump MC of a plurality of magnetic particles MB modified with the first binding substance B1 to specifically bind to the target substance. In the reaction cell R0, the mixing process of mixing the magnetic particles MB and the liquid is performed. The mixing process of mixing the particles (here, the magnetic particles MB) and the liquid is a process of imparting the label to the target substance in the specimen 22. In a case where the magnetic particles MB each have a spherical shape, a diameter thereof is in a range of 0.1 to 10 µm, preferably 0.1 to 5 µm, and more preferably about 1 to 3 µm.

The cell R1 accommodates a buffer solution 36. The cell R2 accommodates a labeling reagent 37 including the label S in which a second binding substance B2 to specifically bind to the target substance is modified. A first luminescent reagent 38 is accommodated in the cell R3, and a second luminescent reagent 39 is accommodated in the cell R4. In the present example, the label S is an enzyme, and the label S emits light in presence of the first luminescent reagent 38 and the second luminescent reagent 39. The buffer solution 36 in the cell R1, the labeling reagent 37 in the cell R2, the first luminescent reagent 38 in the cell R3, and the second luminescent reagent 39 in the cell R4 are simply referred to as a reagent in a case where it is not necessary to distinguish the respective liquids.

The first binding substance B1 and the second binding substance B2, which specifically bind to the target substance, each are, for example, an antibody against an antigen in a case where the target substance is the antigen, an antigen against an antibody in a case where the target substance is the antibody, and an aptamer against a protein or a low-molecular-weight compound in a case where the target substance is the protein or the low-molecular-weight compound. The first binding substance B1 and the second binding substance B2 may be the same as or may be different from each other.

Here, a process of adding the label to the target substance in the specimen 22 in the reaction cell R0 will be described with reference to Fig. 3. A step surrounded by a broken line in Fig. 3 is a step performed in the mixing unit 13. Fig. 3 schematically shows reaction in the reaction cell R0. Here, a case where the specimen 22 includes the target substance A will be described.

First, the buffer solution 36 accommodated in the cell R1 is dispensed to the reaction cell R0 accommodating the magnetic particles MB modified with the first binding substance B 1. Thereafter, the specimen 22 held by the sampling nozzle 42 is dispensed to the reaction cell R0 to which the buffer solution 36 has been dispensed (Step ST11).

In the reaction cell R0, the magnetic particles MB, the specimen 22, and the buffer solution 36 are mixed with one another. In the magnetic particles MB, the specimen 22, and the mixed liquid including the buffer solution 36, as the first reaction, a binding reaction, in which the target substance A in the specimen 22 and the first binding substance B1 specifically bind to each other, occurs (Step ST12). For example, in a case where the target substance A is an antigen, the first binding substance B1 is an antibody, and both the target substance A and the first binding substance B1 are bound to each other through an antigen-antibody reaction. In the first reaction, the target substance A in the specimen 22 binds to the first binding substance B1. Therefore, the target substance A is captured by the magnetic particles MB with the first binding substance B1 interposed therebetween.

Next, a first cleaning process (B/F separation) of removing an unreacted substance other than the target substance A, which is captured by the magnetic particles MB, is performed (Step ST13). In Step ST13 in Fig. 3, both arrows in the up-down direction shown at an upper portion of the reaction cell R0 schematically indicate a state where the discharge of the liquid in the reaction cell R0 and the supply of the liquid to the reaction cell R0 are performed.

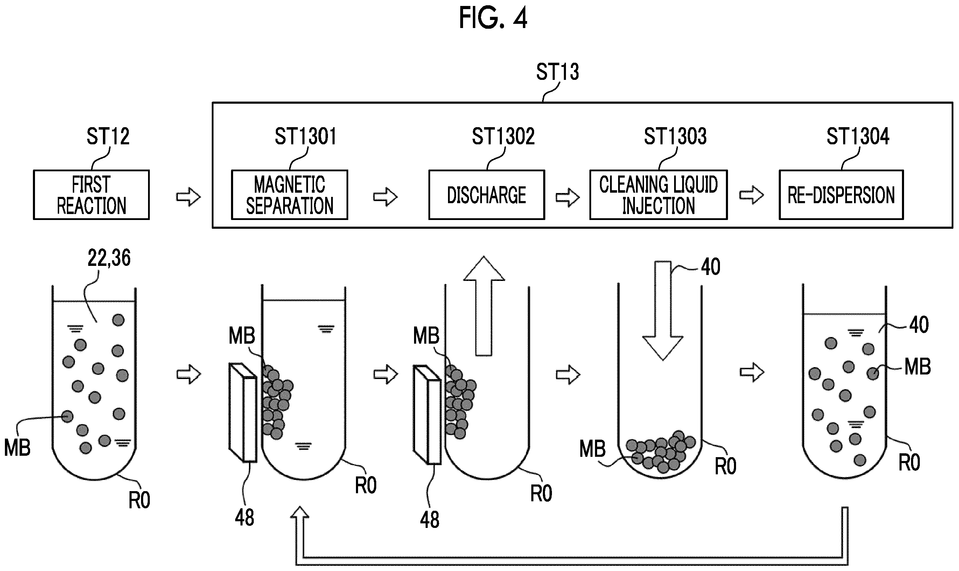

Details of the first cleaning process (Step ST13) will be described with reference to Fig. 4. Fig. 4 does not show the target substance A and the first binding substance B1.

The magnet 48 is disposed close to the outside of the reaction cell R0 in which the first reaction (Step ST12) is completed. Thereby, the magnetic particles MB in the reaction cell R0 are attracted to the magnet 48 and are collected on an inner wall surface of a side wall disposed close to the magnet 48, and magnetic separation of separating the magnetic particles MB and the liquid is performed (Step ST1301).

The liquid in the reaction cell R0 is discharged in a state where the magnetic particles MB are attracted to the inner wall surface of the reaction cell R0 (Step ST1302).

After the liquid is discharged from the reaction cell R0, the reaction cell R0 and the magnet 48 are separated from each other. In such a case, the reaction cell R0 and the magnet 48 are separated from each other such that magnetic force of the magnet 48 does not affect the magnetic particles MB in the reaction cell R0. Then, the cleaning liquid 40 is injected into the reaction cell R0 (Step ST1303).

After the cleaning liquid 40 is injected into the reaction cell R0, the mixed liquid in which the cleaning liquid 40 and the magnetic particles MB are mixed is suctioned and discharged, and the magnetic particles MB are re-dispersed in the cleaning liquid 40 (Step ST1304).

By repeating the steps from the magnetic separation (Step ST1301) to the redispersion (Step 1304) a plurality of times (for example, about 3 times), the unreacted substance other than the target substance A, which is captured by the magnetic particles MB, is removed. The B/F separation is performed by the above-mentioned cleaning step, and the magnetic particles MB and the target substance A, which is captured by the magnetic particles MB, remain in the reaction cell R0.

Returning to Fig. 3, the labeling reagent 37 accommodated in the cell R2 is dispensed to the reaction cell R0 subjected to the B/F separation as described above, and the magnetic particles MB and the labeling reagent 37 are mixed with each other.

In the mixed liquid containing the labeling reagent 37 and the magnetic particles MB, as the second reaction, a binding reaction, in which the target substance A captured by the magnetic particles MB and the second binding substance B2 specifically bind to each other, occurs (Step ST14). Thereby, the target substance A is interposed between the first binding substance B1 and the second binding substance B2, and the label S is applied to the target substance A with the second binding substance B2 interposed therebetween. For example, in a case where the target substance A is an antigen, the second binding substance B2 is an antibody, and both of the antigen and antibody are bound to each other through the antigen-antibody reaction. That is, in such a case, the label S is applied to the target substance A by using the antigen-antibody reaction.

Next, a second cleaning step (B/F separation) of removing the unreacted substance other than the second binding substance B2 which is bound to the target substance A and captured by the magnetic particles MB in the labeling reagent 37 is performed (Step ST15). In the second cleaning process (Step ST15), the two-way arrow in the up-down direction shown above the reaction cell R0 schematically indicates a state where the liquid in the reaction cell R0 is discharged and the liquid is supplied to the reaction cell R0, as in a case of Step ST13.

The second cleaning process (Step ST15) is performed in the same manner as the cleaning step performed in the first cleaning process (Step ST13). That is, the magnetic separation is performed by disposing the magnet 48 close to the outside of the reaction cell R0, the liquid in the reaction cell R0 is discharged, the cleaning liquid 40 is injected, and the magnetic particles MB are re-dispersed in the cleaning liquid 40 (refer to Fig. 4). Even in the second cleaning process (Step ST15), the step from magnetic separation to redispersion is repeated a plurality of times (for example, about 3 times). Thereby, the unreacted substance other than the label S applied to the target substance A, which is captured by the magnetic particles MB, is removed. The B/F separation is performed by the second cleaning process, and the magnetic particles MB, the target substance A, which is captured by the magnetic particles MB, and the label S, which is imparted to the target substance A, remain in the reaction cell R0.

The above-mentioned steps are steps of performing a process of imparting the label S to the target substance A in the specimen 22.

Thereafter, the first luminescent reagent 38 accommodated in the cell R3 and the second luminescent reagent 39 accommodated in the cell R4 are added to the reaction cell R0 (Step ST16). Thereby, the magnetic particles MB, the first luminescent reagent 38, and the second luminescent reagent 39 are mixed with one another.

The above-mentioned steps are a pre-process performed on the specimen 22 in the reaction cell R0 in the mixing unit 13.

The mixing unit 13 performs the above-mentioned pre-process, and the reagent dispensing unit 13A suctions and discharges various liquids. For example, as described above, the cleaning liquid 40 is suctioned from the cleaning liquid accommodating portion that accommodates the cleaning liquid 40, and the suctioned cleaning liquid 40 is discharged to the reaction cell R0, or each of the reagents is suctioned from each of the cells R1 to R4, and the suctioned reagent is discharged to the reaction cell R0.

The cartridge RC, on which the above-mentioned pre-process is completed, is transported to the detecting unit 15 by the transport unit 13B and is subjected to the detecting process in the detecting unit 15. In the reaction cell R0, the label S, which is imparted to the target substance A, reacts with the first luminescent reagent 38 and the second luminescent reagent 39, which are the luminescent substrates added in Step ST16, to generate chemiluminescence L. The photodetector 50 detects the chemiluminescence L.

As shown in Fig. 1, the examination apparatus 10 includes a nozzle imaging camera 62 that captures an image of the sampling nozzle 42 on which the chip 42A is mounted. The nozzle imaging camera 62 captures an image of the sampling nozzle 42 after the specimen 22 is suctioned through the sampling nozzle 42 and before the specimen 22 is discharged to the reaction cell R0. That is, the nozzle imaging camera 62 captures an image of the sampling nozzle 42 in a state of holding the specimen 22.

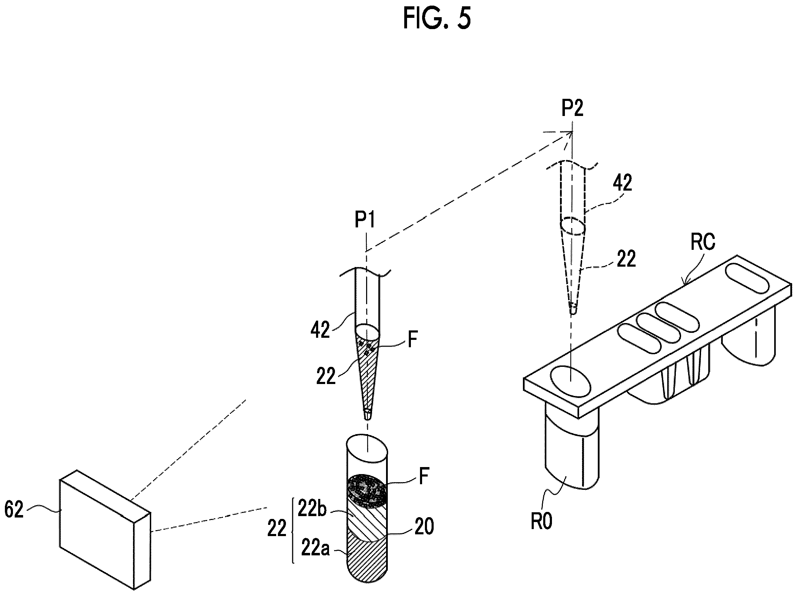

The nozzle imaging camera 62 may be disposed to be able to capture an image of the sampling nozzle 42 after the specimen 22 is suctioned through the sampling nozzle 42 and before the specimen 22 is dispensed. In the present embodiment, as shown in Fig. 5, the nozzle imaging camera 62 is disposed to be able to capture an image of the sampling nozzle 42 positioned at the suction position P1.

The processor 16 determines whether or not the formed element is present in the specimen 22 on the basis of the image of the sampling nozzle 42 which is acquired from the nozzle imaging camera 62. Then, in a case where the processor 16 determines that the specimen 22 includes a formed element F (refer to Fig. 5), the processor 16 controls the specimen dispensing unit 14 such that the specimen dispensing unit 14 discards the upper layer including the formed element F of the specimen 22 accommodated in the specimen collection container 20.

In the examination apparatus 10, a step from the suction of the specimen 22 through the sampling nozzle 42 to the specimen dispensing Step ST11 of discharging the specimen 22 to the reaction cell R0 will be described with reference to Fig. 6.

First, in the examination apparatus 10, the chip 42A is mounted on the distal end of the sampling nozzle 42, here, on the distal end of the nozzle body 42B, at a chip mounting position not shown in the drawing. The processor 16 controls the moving mechanism 46 such that the moving mechanism 46 positions the sampling nozzle 42 at the suction position P1 and moves the sampling nozzle 42 vertically downward to insert the chip 42A into the specimen collection container 20. Then, the distal end of the chip 42A is positioned at a predetermined suction position, and the specimen 22 is suctioned (Step ST1001).

In the present embodiment, the specimen 22 is blood, is subjected to a centrifugal separation process, and is separated into blood cells 22a and blood plasma 22b. In the specimen collection container 20, the blood cells 22a having a higher specific gravity than the blood plasma 22b are separated to the bottom portion side of the specimen collection container 20, and the blood plasma 22b is separated to the upper portion side of the blood cells 22a. In the present embodiment, the liquid blood plasma 22b is used for the examination. Therefore, in Step ST1001, the distal end of the chip 42A is positioned in the blood plasma 22b to suction the blood plasma 22b.

Next, the processor 16 controls the moving mechanism 46 such that the moving mechanism 46 moves the sampling nozzle 42 to the upper side of the specimen collection container 20. Then, the processor 16 controls the nozzle imaging camera 62 such that the nozzle imaging camera 62 captures an image of the sampling nozzle 42 in a state where the specimen 22 (here, the blood plasma 22b) is suctioned (Step ST1002).

The processor 16 acquires an image PA of the sampling nozzle 42 in a state where the specimen 22 is suctioned from the nozzle imaging camera 62, and determines whether or not the formed element F is present in the suctioned specimen 22 (Step ST1003).

In the specimen 22 which is blood subjected to the centrifugal separation process in the specimen collection container 20, a part of the formed element F, such as fibrin, may be floating on the upper layer portion. Then, in a case where the blood plasma 22b is suctioned through the sampling nozzle 42, the formed element F may be suctioned together with the blood plasma 22b. The processor 16 determines whether or not the specimen 22 (here, blood plasma 22b) suctioned into the sampling nozzle 42 includes such a formed element F.

Examples of the method of determining whether or not the formed element F is mixed into the specimen 22 include a method of detecting fluctuation in luminance value in the length direction (up-down direction) of the sampling nozzle 42 in the image PA of the sampling nozzle 42 holding the specimen 22 and determining that the formed element is present in a case where there is a portion which is predetermined in the specimen 22 and in which the fluctuation in luminance value is equal to or greater than a threshold value and determining that the formed element is not present in a case where there is no portion in which the fluctuation in luminance value is equal to or greater than the threshold value.

In a case where the processor 16 determines that the formed element F is present in the suctioned specimen 22, the processor 16 controls the moving mechanism 46 such that the moving mechanism 46 moves the sampling nozzle 42 to a waste liquid processing unit not shown in the drawing, and discards the specimen 22 held by the sampling nozzle 42 in a waste liquid storage cell not shown in the drawing. Then, the processor 16 controls the moving mechanism 46 such that the moving mechanism 46 moves the sampling nozzle 42 again to the suction position P1, suctions the upper layer including the formed element F of the specimen 22 accommodated in the specimen collection container 20 (Step ST1004), and moves the upper layer to the waste liquid processing unit to discard the upper layer into the waste liquid storage cell. Thereby, the formed element F of the specimen 22 in the specimen collection container 20 is removed (Step ST1005).

The processor 16 controls the specimen dispensing unit 14 such that the specimen dispensing unit 14 replaces the chip 42A of the sampling nozzle 42, moves the sampling nozzle 42 on which the new chip 42A is mounted to the suction position P1, inserts the sampling nozzle 42 into the specimen collection container 20 by moving the sampling nozzle 42 in the vertical direction, and suctions the specimen 22 (here, blood plasma 22b) again (Step ST1006). Since the formed element F in the specimen collection container 20 has already been removed, the formed element F is not included in the re-suctioned specimen 22.

The processor 16 controls the moving mechanism 46 such that the moving mechanism 46 moves the sampling nozzle 42 holding the re-suctioned specimen 22 to the dispensing position P2 and discharges the specimen 22 to the reaction cell R0 (Step ST11 in Fig. 3).

In a case where the processor 16 determines that the suctioned specimen 22 does not include the formed element F, the processor 16 controls the moving mechanism 46 such that the moving mechanism 46 moves the sampling nozzle 42 holding the specimen 22 to the dispensing position P2 and discharges the specimen 22 to the reaction cell R0.

In a case of suctioning the upper layer of the specimen 22 in the specimen collection container 20 of Step ST1004, the chip 42A used for suctioning the specimen 22 may be discarded, a new chip 42A may be mounted on the sampling nozzle 42, and the upper layer of the specimen 22 including the formed element F may be suctioned through the new chip 42A. In this case as well, the re-suctioning of the specimen 22 is performed by replacing the chip 42A again.

After the specimen 22 is discharged to the reaction cell R0, the mixing process is performed in the mixing unit 13 as described above with reference to Figs. 3 and 4, and the detecting process is performed in the detecting unit 15.

In a case where the specimen 22 in which the formed element F is mixed is discharged to the reaction cell R0 and subjected to the above-mentioned mixing process, the binding between the target substance A and the first binding substance B1 in the first reaction may be inhibited, and the amount of the target substance A to be captured by the magnetic particles MB may be less than the original amount. Therefore, in a case where the examination is performed using the specimen 22 into which the formed element F is mixed, a detection amount of the target substance A obtained as a result may be lower than an amount of the target substance A originally included in the specimen 22. That is, in a case where the mixing process and the detecting process are performed using the specimen 22 into which the formed element F of the specimen 22 is mixed, the concentration of the target substance A detected in the detecting process may be different from the actual concentration.

However, as described above, the examination apparatus 10 includes the nozzle imaging camera 62 that captures an image of the sampling nozzle 42. The processor 16 controls the specimen dispensing unit 14 such that the specimen dispensing unit 14 discards the upper layer including the formed element F of the specimen 22 accommodated in the specimen collection container 20 in a case of determining that the formed element F is present in the specimen 22. With such a configuration, it is possible to suppress the suction of the formed element F at the time of the re-suctioning of the specimen 22, and it is possible to suppress occurrence of the detection error that occurs in a case where the examination is performed while the formed element F is mixed into the specimen 22. Thus, it is possible to perform a highly reliable examination. Further, in a case of the re-suction, the suction of the formed element F into the sampling nozzle 42 is able to suppress occurrence of the abnormal stoppage due to the pressure detection error. That is, in a case where the specimen 22 is suctioned into the sampling nozzle 42 from the specimen collection container 20 for the first time, the specimen 22 suctioned into the sampling nozzle 42 may include the formed element F. In such a case, the upper layer of the specimen 22 in the specimen collection container 20 is discarded. Therefore, the formed element F floating on the upper layer of the specimen 22 in the specimen collection container 20 can be discarded. Thus, it is possible to suppress occurrence of an error in a case of suctioning the specimen 22 from the specimen collection container 20 again.

In the examination apparatus 10 of the present embodiment, after the processor 16 discards the upper layer including the formed element F in the specimen 22 accommodated in the specimen collection container 20, the processor 16 controls the specimen dispensing unit 14 such that the specimen dispensing unit 14 performs a process of suctioning the specimen 22 from the specimen collection container 20 again and discharging the specimen 22 to the reaction cell R0. Therefore, the examination can be continued promptly without delaying the examination.

In addition, in the examination apparatus 10 according to the above-mentioned embodiment, the processor 16 may be configured to display an error message indicating that the specimen 22 has the formed element on the touch panel display 18 in a case of determining that the formed element F is present in the specimen 22 held in the sampling nozzle 42. In such a case, the touch panel display 18 constitutes a notification unit that issues a notification of an error. In addition, as the notification unit that issues the notification of the error, a speaker that issues a notification of the error by voice, a light emitting unit that issues a notification of the error by emitting light, or the like may be provided separately from the touch panel display 18.

In a case where there is provided a notification unit (here, the touch panel display 18) that issues the notification of the error, the processor 16 is configured to cause the notification unit to issue the notification of the error indicating that the formed element F is present in the specimen 22. With such a configuration, a user is able to recognize that the formed element F is floating in the specimen collection container 20. Thereby, the user is able to take measures such as adjusting pre-process conditions such as conditions during centrifugal separation and thereafter suppressing the generation of the floating formed element F for the specimen to be examined.

The examination apparatus 10 according to the above-mentioned embodiment automatically re-suctions the specimen 22 after discarding the upper layer of the specimen collection container 20. However, in a case where the processor 16 is configured to cause the notification unit to issue a notification that the specimen 22 has the formed element, the processor 16 may be configured to receive an instruction by the user to perform the re-suctioning of the specimen 22 from the instruction receiving unit, such as the touch panel display 18, and then to perform the re-suctioning of the specimen 22. In such a case, the user is able to execute the re-suction after checking the removal state of the formed element F in the upper layer of the specimen 22 in the specimen collection container 20. Thus, it is possible to further perform a highly reliable examination.

In the examination apparatus 10 according to the above-mentioned embodiment, the nozzle imaging camera 62 is disposed at a position at which the image of the sampling nozzle 42 positioned at the suction position P1 can be captured, and captures the image of the sampling nozzle 42 through which the specimen 22 is suctioned at the suction position P1. However, the nozzle imaging camera 62 may be disposed at a position capable of capturing the image of the sampling nozzle 42 in a state of holding the specimen 22 after the specimen 22 is suctioned and before the specimen 22 is discharged. Further, the nozzle imaging camera 62 may be disposed at a position capable of capturing the image of the sampling nozzle 42 positioned between the suction position P1 and the dispensing position P2. In such a case, the nozzle imaging camera 62 may capture the image of the sampling nozzle 42 which is being moved by the moving mechanism 46.

In each of the embodiments, the examination apparatus that detects the target substance by detecting luminescence or fluorescence from the label attached to the target substance by using the antigen-antibody reaction has been described. However, the invention of the present disclosure can also be applied to an examination apparatus that performs the biochemical analysis by using a reaction other than the antigen-antibody reaction.

In each of the above-mentioned embodiments, as hardware structures of processing units that execute various types of process as the internal configuration of the processor 16, the following various processors can be used. The various processors include, for example, a CPU which is a general-purpose processor executing software to function as various processing units as described above, a programmable logic device (PLD), such as a field programmable gate array (FPGA), which is a processor whose circuit configuration can be changed after manufacture, or a dedicated electric circuit, such as an application specific integrated circuit (ASIC), which is a processor having a dedicated circuit configuration designed to perform a specific process.

One processing unit may be constituted by one of the various processors, or may be a combination of two or more processors of the same type or different types (for example, a combination of a plurality of FPGAs and/or a combination of a CPU and an FPGA). The plurality of processing units may be configured of one processor.

As an example of the plurality of processing units composed of one processor, first, as represented by computers such as a client and a server, there is a form in which one processor is composed of a combination of one or more CPUs and software and this processor functions as a plurality of processing units. A second example of the configuration is an aspect in which a processor that implements the functions of the whole system including a plurality of processing units using one integrated circuit (IC) chip is used. A representative example of this aspect is a system-on-chip (SoC). As described above, the various processing units are configured using one or more of the various processors as the hardware structure.

More specifically, a circuitry combining circuit elements such as semiconductor elements may be used as the hardware structure of the various processors.

The present disclosure is not limited to the above-mentioned embodiments, and can be implemented with appropriate modifications, such as omitting a configuration or replacing a configuration with a different configuration within the scope that does not deviate from the gist of the present disclosure.

The disclosure of JP2022-043030 filed on March 17, 2022 is incorporated herein by reference in its entirety.

All documents, patent applications, and technical standards described in the present specification are incorporated into the present specification by reference to the same extent as in a case where the individual documents, patent applications, and technical standards were specifically and individually stated to be incorporated by reference.

## Claims

1. An examination apparatus comprising:
a detecting unit that detects a target substance in a specimen;
a specimen dispensing unit that has a sampling nozzle, through which the specimen is suctioned from a specimen collection container and the specimen is discharged to a reaction cell, and a moving mechanism which moves the sampling nozzle;
a nozzle imaging camera that captures an image of the sampling nozzle; and
a processor that is configured to control the specimen dispensing unit and the nozzle imaging camera,
wherein the processor is configured to
acquire an image of the sampling nozzle in a state of holding the specimen after the specimen is suctioned through the sampling nozzle and before the specimen is discharged to the reaction cell through the sampling nozzle, from the nozzle imaging camera,
determine whether or not a formed element is present in the specimen held in the sampling nozzle, on the basis of the image, and
discard an upper layer of the specimen accommodated in the specimen collection container, the upper layer including the formed element, by controlling the specimen dispensing unit in a case of determining that the formed element is present.

2. The examination apparatus according to claim 1,
wherein the processor is configured to control the specimen dispensing unit such that the specimen dispensing unit performs a process of suctioning the specimen again from the specimen collection container and discharging the specimen to the reaction cell, after discarding the upper layer including the formed element of the specimen accommodated in the specimen collection container.

3. The examination apparatus according to claim 1, further comprising:
a notification unit that issues a notification of an error,
wherein the processor is configured to cause the notification unit to issue a notification of presence of the formed element in a case of determining that the formed element is present in the specimen held in the sampling nozzle.

4. The examination apparatus according to any one of claims 1 to 3,
wherein the specimen is a blood plasma or a serum in whole blood subjected to a centrifugal separation process in the specimen collection container.

5. The examination apparatus according to any one of claims 1 to 4,
wherein the detecting unit detects the target substance by detecting luminescence or fluorescence from a label attached to the target substance by using an antigen-antibody reaction.
